(19) Europäisches Patentamt
European Patent Office
Office européen des brevets

(11) EP 1 779 928 B1

(12) **EUROPEAN PATENT SPECIFICATION**

(45) Date of publication and mention
of the grant of the patent:
**02.05.2012 Bulletin 2012/18**

(51) Int Cl.:
*B01J 23/755* (2006.01)      *C08F 10/14* (2006.01)
*B01J 37/14* (2006.01)

(21) Application number: **06020489.8**

(22) Date of filing: **28.09.2006**

(54) **Method of stabilizing a nickel catalyst**

Methode zur Stabilisierung eines Nickel Katalysators

Méthode de stabilisation d'un catalyseur à base de nickel

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.09.2005 JP 2005289436**

(43) Date of publication of application:
**02.05.2007 Bulletin 2007/18**

(73) Proprietor: **Sued-Chemie Catalysts Japan, Inc.
Shibuya-ku,
Tokyo 151-0053 (JP)**

(72) Inventors:
• **Takeda, Hiroshi
c/o Süd-Chemie Catalysts Japan
Nei-gun
Toyama 939-2753 (JP)**
• **Hirahara, Shinya
c/o Süd-Chemie Catalysts Japan
Nei-gun
Toyama 939-2753 (JP)**

(74) Representative: **Westendorp, Michael Oliver
Westendorp I Sommer
Uhlandstrasse 2
80336 München (DE)**

(56) References cited:
**US-A- 3 033 802      US-A1- 2004 074 337**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field to Which the Invention Pertains]

The present invention relates to a method of stabilizing a catalyst and, particularly to a method of stabilizing a reduced Ni-containing catalyst.

[Background Art]

There has conventionally been reported a method of stabilizing a reduced Ni-containing catalyst by wrapping with appropriate lipids to block contact with air as a method of stabilizing a catalyst to obtain a stable, reduced Ni-containing catalyst in the air (refer to Non-patent Document 1).

Moreover, there has been reported a method of allowing the stabilization of the surface of a reduced Ni-containing catalyst by coating with an oxide film. For example, there has been known a method of feeding mixed gas in which 0.1% by volume of $O_2$ is mixed into $CO_2$, into a reduced Ni-containing catalyst at 10°C (refer to Patent document 1). In this method, the amount of $O_2$ is progressively added from 0.1% by volume to 3.0% by volume to prevent hot spot formation due to rapid heat generation. Furthermore, in this method, 0.1% by volume of $O_2$ is fed into a state where the reduced Ni-containing catalyst exists in the CO2 gas in a pulse pattern to prevent the temperature of a catalytic layer from rising above 51.7°C.

In addition, there has been known a stabilization method of introducing air after a reduced Ni-containing catalyst is treated with water as liquid, or water vapor as gaseous body, as another method of allowing the stabilization of the surface of the reduced Ni-containing catalyst by coating with the oxide film (refer to Patent Document 2).

Moreover, there has been known a stabilization method of treating a reduced Ni-containing catalyst with air or $O_2$ gas to which inert gas is added at below 60°C as another method of allowing the stabilization of the surface of the reduced Ni-containing catalyst by coating with the oxide film (refer to Patent Document 3).

Furthermore, there has been known a stabilization method of adding inert gas to air to obtain controlled $O_2$ concentration and introducing this gas into a reduced Ni-containing catalyst at 38 to 260°C, and 103 to 34475 kPa as another method of allowing the stabilization of the surface of the reduced Ni-containing catalyst by coating with the oxide film (refer to Patent Document 4).

In addition, there has been known a method of stabilizing a reduced Ni-containing catalyst with mixed gas of 0.1 to 1% by volume $O_2$, 0.6% by volume $CO_2$, and $N_2$ as another method of allowing the stabilization of the surface of the reduced Ni-containing catalyst by coating with the oxide film (refer to Patent Document 5).

[Non-patent Document 1] Petrotech (2004), Volume 27, No. 5, pp. 431 to 433, Kawagoe, Deitz et al.
[Patent Document 1] U.S. Patent No. 2,677,668 specification
[Patent Document 2] U.S. Patent No. 2,495,497 specification
[Patent Document 3] U.S. Patent No. 2,565,347 specification
[Patent Document 4] U.S. Patent No. 3,838,066 specification
[Patent Document 5] Translated National Publication of Patent Application No. 2002-537974

US 2004/0074337 A1 discloses a process for preparing and passivating Raney nickel from a 50:50 aluminum-nickel alloy. The aluminum-nickel alloy is etched to form Raney nickel. The Raney nickel is then suspended in water and introduced to oxygen bubbled into the suspension thereby passivating the Raney nickel.

US 3,033,802 pertains to a method of rendering a finely divided reduced nickel catalyst non-pyrophoric by entrainment in a stream of non-oxidizing gas containing therein a controlled quantity of oxygen.

[Disclosure of the Invention]

[Problems to be Solved by the Invention]

However, the method of stabilizing the reduced Ni-containing catalyst by wrapping with the appropriate lipids to block contact with the air causes a problem with a mixture of lipids into an object obtained by catalytic reaction or a problem with removal of the mixture thereof, and has the disadvantage that these problems lower ease of use of or economy of a catalyst because it will become indispensable to carry out a delipidization process with respect to the catalyst wrapped with the lipids in order to avoid such a mixture of the lipids as described above.

Moreover, the method of allowing the stabilization of the surface of the reduced Ni-containing catalyst by coating with the oxide film is required to keep the heat generation during $O_2$ introduction low in order to prevent the hot spot formation due to the rapid reaction with $O_2$. And, in the prior art, the stabilization is made in such a way that $CO_2$ into which a trace amount (0.1% by volume) of $O_2$ is first mixed or inert gas is introduced into the reduced Ni-containing catalyst on a routine base or on an intermittent base, as described above, the $O_2$ concentration is further slightly increased after the heat generation in the $O_2$ concentration is not observed, for example, the same operation as above is carried out with gas containing 1% by volume $O_2$, and further the $O_2$ concentration is increased again to repeat the same operation in a stepwise fashion till the same $O_2$ concentration as the air after the heat generation in the $O_2$ concentration is not observed, or that contact with air is allowed after the reduced Ni-containing catalyst is treated with water or water vapor. In this way, the prior art has the disadvantage that the time required for the stabilization is very long, or a plurality of processes are required because of keeping the heat generation low during the $O_2$ introduction.

[Means for Solving the Problems]

As a result of making diligent studies in order to resolve the problems described above, the present inventor has found out that when gas in which three kinds of $O_2$, $H_2O$, and $CO_2$ coexist, or gas in which four kinds of $O_2$, $H_2O$, $CO_2$, and inert gas coexist is brought into contact with a reduced Ni-containing catalyst as stabilization gas, the reduced Ni-containing catalyst can be stabilized in a very short period of time without experiencing a plurality of processes, and brought the present invention to completion.

According to an aspect, the present invention provides a method of stabilizing a reduced Ni-containing catalyst as defined in claim 1.

The present invention provides a method of stabilizing a reduced Ni-containing catalyst, characterized in that mixed gas composed of $O_2$, $H_2O$, and $CO_2$ is brought into contact with the reduced Ni-containing catalyst. Moreover, in the stabilization method of the present invention, the mixed gas may further allow the coexistence of the inert gas. Additionally, in the stabilization method of the present invention, the inert gas may be any one or more kinds selected from the group consisting of $N_2$, He, and Ar. Furthermore, in the stabilization method of the present invention, stabilization temperature may be not less than 0.1°C, and less than 100°C.

[Effects of the Invention]

In accordance with the stabilization method of the present invention, it is not only possible to prepare a catalyst with physical properties and hydrogenation activity equivalent to the reduced Ni-containing catalyst prepared by the stabilization method with gas in which $CO_2$ and inert gas (for example, $N_2$) alone are mixed into $O_2$, which has been industrially, widely implemented, it being also possible to complete the stabilization in a very short period of time. With the feature, a catalyst with performance equal to the reduced Ni-containing catalyst which has been industrially, widely utilized can be inexpensively prepared, the industrial value of which is thus great.

[Best Mode for Carrying Out the Invention]

Next, the present invention will be described in more detail.

In a stabilization method of the present invention, when gas in which three kinds of $O_2$, $H_2O$, and $CO_2$ coexist, or mixed gas of four kinds of elements in which inert gas is further added to the mixed gas of the three kinds of the elements is used as stabilization gas, the stabilization can be completed in a very short period of time, and at the same time the catalytic activity of a catalyst to which stabilization treatment of the present invention is given is almost equivalent to that of a catalyst to which conventional stabilization treatment is given, which is thus preferable. It should be noted that the coexistence of $O_2$, $H_2O$, and $CO_2$ is indispensable for the stabilization gas of the present invention, and that even if one of these three kinds of the elements lacks, the stabilization cannot progress rapidly. Accordingly, gas in which $O_2$ and $H_2O$ alone coexist or gas in which $O_2$ and $CO_2$ alone coexist takes much time required for stabilization to resolve problems with a hot spot, that is, requires almost the same time as in the case of the stabilization with gas in which $O_2$ and $N_2$ coexist, which is undesirable. On the other hand, a problem exists that the catalytic activity declines because the gas in which $O_2$ and $CO_2$ alone coexist not only brings about insufficient stabilization, but also decreases the surface area of an Ni-containing catalyst reduced after the stabilization, which is undesirable.

Mixing $H_2O$ into $O_2$, $CO_2$ gas and/or inert gas is carried out by a method considered as being suitable for a process, such as a method by which the gas described above is bubbled in water to be entrained by $H_2O$, a method by which an ultrasonic wave is applied to water to produce fine water particles, which is entrained by $O_2$, $CO_2$ gas and/or inert gas, or a method by which water vapor is generated in advance and mixed with the $O_2$, $CO_2$ gas and/or inert gas.

In addition, as a further embodiment of the present invention, it has been found out that when using the mixed gas of the four kinds of the elements in which the inert gas is further mixed into the mixed gas of the three kinds of the elements described above, the same effect as in the case of the stabilization with the mixed gas of the three kinds of the elements can be obtained. It should be noted that preferred inert gas in the present invention includes $N_2$, He, and Ar.

Moreover, in the stabilization method of the present invention, the mixing ratio of $O_2$ in the mixed gas composed of $O_2$, $H_2O$, and $CO_2$ is 0.01 to 10.00% by volume, desirably 0.10 to 5.00% by volume, the mixing ratio of $H_2O$ is 0.10 to 60.00% by volume, desirably 1.00 to 50.00% by volume, and the mixing ratio of $CO_2$ is 30.00 to 99.89% by volume, desirably 45.00 to 98.90% by volume.

Furthermore, in the stabilization method of the present invention, the mixing ratio of $O_2$ in the mixed gas composed of $O_2$, $H_2O$, $CO_2$, and inert gas is 0.01 to 10.00% by volume, desirably 0.10 to 5.00% by volume, the mixing ratio of the $H_2O$ is 0.10 to 60.00% by volume, desirably 1.00 to 60.00% by volume, the mixing ratio of the $CO_2$ is 19.90 to 95.00% by volume, desirably 34.00 to 95.00% by volume, and the mixing ratio of the inert gas is 1.00 to 70.00% by volume, desirably 1.00 to 60.00% by volume..

The term "stabilization temperature," as used in the stabilization method of the present invention, means temperature including the temperature of a catalytic layer, the atmospheric temperature of a catalytic layer, and the atmospheric temperature of stabilized gas when carrying out the stabilization method, but this temperature is preferably not less than 0.1°C, and less than 100°C, and more preferably 10 to 76°C. If the stabilization temperature is less than 0.1°C, water ($H_2O$) may freeze, and the stabilization does not progress, which is not preferable. On the other hand, if the stabilization temperature is not less than 0.1°C, the stabilization progresses. Furthermore, an increase in the stabilization temperature allows the time required for the completion of the stabilization to be shortened with the increased temperature. However, if the stabilization temperature is not less than 100°C, the catalytic activity declines from the fact that the amount of metal Ni of a catalyst after the stabilization and the surface area are reduced due to a drastic progress of the reaction of the reduced Ni-containing catalyst with $O_2$, which is not preferable.

In addition, in the stabilization method of the present invention, pressure at the time of the stabilization is desirably from normal pressure to pressurization. Namely, such pressure as described above is $1.013 \times 10^2$ to $8.375 \times 10^2$ kPa, desirably $1.013 \times 10^2$ to $3.041 \times 10^2$ kPa, but may be reduced pressure. The above pressure may be suitable pressure in consideration of a process or economy.

Moreover, a reactor employed in the stabilization method of the present invention may be a reactor of any form if contact between the reduced Ni-containing catalyst and the stabilized gas takes place to a satisfactory extent. For example, a fixed bed reactor, an agitation fluidized bed reactor, a fluidized bed reactor, and the like are suitable, but a reactor of other form is acceptable.

Furthermore, in the stabilization method of the present invention, the flow rate of mixed gas when the mixed gas is brought into contact with the reduced Ni-containing catalyst is 1 to 200 ml/min per 1 g of a catalyst, desirably 10 to 100 ml/min.

Such a stabilization method of the present invention as described above will allow the stabilization to be completed in 1 to 4 hours during which the mixed gas is introduced, especially in a short period of time from 2 to 3 hours.

[Examples]

Hereinafter, the validity of the present invention will be described with Examples. However, it is to be understood that these Examples herein are for the purpose of illustrating summary of the present invention, and that the present invention is not intended to be limited to these Examples.

[Preparation of a test sample]

An intermediate material with a composition of NiO (60% by weight)/$SiO_2$ (40% by weight) was used as a material for preparing a reduced Ni-containing catalyst (Ni-containing catalyst containing stable metal Ni in the air). It should be noted that the intermediate material with the composition of the NiO/$SiO_2$ has been industrially, widely used, and is in a state where the Ni is being oxidized. Fourteen grams of the intermediate material with the composition of the NiO/$SiO_2$ was charged into a quartz reaction tube, and $H_2$ with a flow rate of 2.5 liter/min was introduced therein at room temperature to conduct an $H_2$ purge of the sample, followed by increasing the temperature thereof in a state where $H_2$ flow with the same flow rate as above remained flowing. Its temperature increase rate was 10°C/min, and after the temperature reached 400°C, hydrogen reduction was carried out at the same temperature as above for 45 minutes. After that, the sample was left standing to cool in the state where the $H_2$ flow with the same flow rate remained flowing, and subjected to an N2 purge as soon as the temperature reached room temperature. It should be noted that the $N_2$ flow rate at the time of the N2 purge was set to 1 liter/min. The thus reduced Ni-containing catalyst (Ni/Si02 catalyst containing Metal Ni) was prepared and rendered a test sample for ensuring the effects of the stabilization method of the present invention.

[Example 1]

Examples of stabilization using mixed gas of three kinds of $O_2$, $H_2O$, and $CO_2$ in accordance with the present invention will be shown below. Mixed gas of three kinds of elements with a composition of 0.9% by volume $O_2$, 1.9% by volume $H_2O$, and 97.2% by volume $CO_2$ was introduced into 14.0 g of the reduced Ni-containing catalyst prepared by the method described above at 25°C for 2 hours to carry out the stabilization. The flow rate of the mixed gas of the three kinds of the elements at this time was set to 640 ml/min. This was rendered Example 1.

[Example 2]

Stabilization was carried out in the same method as that of Example 1, except that mixed gas of four kinds of 0.9% by volume $O_2$, 1.9% by volume $H_2O$, and 93.7% by volume $CO_2$, and 3.5 % by volume $N_2$ was used as stabilization gas.

[Comparative example 1]

As a comparative example, stabilization gas in which $O_2$ was diluted with $N_2$, which has been industrially, widely implemented was introduced into 14.0 g of the catalyst prepared by the method of preparing the test sample described above at 25°C to carry out stabilization, while changing the ratio of $O_2$ and $N_2$ with time. More specifically, mixed gas having a composition of 0.1 % by volume $O_2$ and 99.9 % by volume $N_2$ was treated for 0.5 hours, then the $O_2$ concentration of the mixed gas was increased to 0.5% by volume and treated for 0.5 hours, then the $O_2$ concentration of the mixed gas was increased to 1.0% by volume and treated for 16 hours, then the $O_2$ concentration of the mixed gas was increased to 2.5% by volume and treated for 0.5 hours, then the $O_2$ concentration of the mixed gas was increased to 5% by volume and treated for 0.5 hours, then the $O_2$ concentration of the mixed gas was increased to 10% by volume and treated for 0.5 hours, then the $O_2$ concentration of the mixed gas was increased to 15% by volume and treated for 0.5 hours, and then the $O_2$ concentration of the mixed gas was increased to 20% by volume and treated for 0.5 hours to carry out the stabilization. Any flow rate of the mixed gas at this time was set to 640 ml/min. This was rendered Comparative example 1.

[Comparative example 2]

Stabilization was carried out in the same method as that of Comparative example 1, except that treating time when the $O_2$ concentration of the mixed gas was set to 1.0% by volume was changed to 2 hours, which was rendered Comparative example 2.

[Comparative example 3]

Stabilization was carried out in the same method as that of Example 1, except that mixed gas of 0.9% by volume $O_2$ and 99.1% by volume $N_2$ was used as stabilization gas, which was rendered Comparative example 3.

[Comparative example 4]

Stabilization was carried out in the same method as that of Example 1, except that mixed gas of 0.9% by volume $O_2$, 1.9% by volume $H_2O$, and 97.2% by volume $N_2$ was used as stabilization gas, which was rendered Comparative example 4.

[Comparative example 5]

Stabilization was carried out in the same method as that of Example 1, except that mixed gas of 0.9% by volume $O_2$, and 99.1% by volume $CO_2$ was used as stabilization gas, which was rendered Comparative example 5.

[Comparative example 6]

Stabilization was carried out in the same method as that of Example 1, except that mixed gas of 1.9% by volume $H_2O$, and 98.1% by volume $CO_2$ was used as stabilization gas, which was rendered Comparative example 6.

[Comparative example 7]

Stabilization was carried out in the same method as that of Example 1, except that mixed gas of 1.9% by volume $H_2O$, and 98.1% by volume $N_2$ was used as stabilization gas, which was rendered Comparative example 7.

[Comparative example 8]

Stabilization was carried out in the same method as that of Example 1, except that mixed gas of 97.2% by volume $CO_2$, and 2.8% by volume $N_2$ was used as stabilization gas, which was rendered Comparative example 8.

The degree of an increase in catalyst temperature when the Ni-containing catalysts reduced by the methods of Examples 1 and 2, and Comparative examples 1 to 8 described above were subjected to the stabilization treatment, and then removed into the air is shown in Table 1.

[Table 1]

| [Table 1] Degree of an increase in catalyst temperature after treatment with varying stabilization gas | | | |
|---|---|---|---|
| Number | Kinds of stabilization gas | Time required for stabilization (hour) | Degree of an increase in catalyst temperature (°C) |
| Example 1 | $O_2+H_2O+CO_2$ | 2.0 | 3 to 5 |
| Example 2 | $O_2+H_2O+CO_2+N_2$ | 2.0 | 3 to 5 |
| Comparative example 1 | $O_2+N_2$ | 19.5 | 3 to 5 |
| Comparative example 2 | $O_2+N_2$ | 5.5 | >200 |
| Comparative example 3 | $O_2+N_2$ | 2.0 | >200 |
| Comparative example 4 | $O_2+H_2O+N_2$ | 2.0 | >200 |
| Comparative example 5 | $O_2+CO_2$ | 2.0 | >200 |
| Comparative example 6 | $H_2O+CO_2$ | 2.0 | >200 |
| Comparative example 7 | $H_2O+N_2$ | 2.0 | >200 |
| Comparative example 8 | $CO_2+N_2$ | 2.0 | >200 |

The stabilization method with the mixed gas of $O_2$ and $N_2$ shown in Comparative example 1 was a method which has been industrially, widely implemented, and allowed for safe handling because the degree of an increase in catalyst temperature when the reduced Ni-containing catalyst was stabilized with the stabilization gas, and then removed into the air was 3 to 5°C. However, the time required for the stabilization method shown in the Comparative example 1 was as long as 19.5 hours.

The stabilization methods shown in Comparative examples 2 and 3 employed the mixed gas of $O_2$ and $N_2$, which has been industrially, widely used, but the stabilization time was shortened up to 2 hours, which has been provided by the methods of the present invention, and did not allow for the safe handling because the degree of the increase in the catalyst temperature when the reduced Ni-containing catalysts were stabilized with the stabilization gas, and then removed into the air was not less than 200°C. As a result, it became clear that the stabilization of the reduced Ni-containing catalysts did not progress to a satisfactory extent.

On the other hand, the stabilization methods shown in Examples 1 and 2, the stabilization time of which was as short as 2 hours, and allowed for the safe handling because the degree of the increase in the catalyst temperature when the reduced Ni-containing catalysts were stabilized with the stabilization gas, and then removed into the air was 3 to 5°C. It should be noted that the degree of the increase in the catalyst temperature was equivalent to that of Comparative example 1. As described above, in the stabilization methods of the present invention, the stabilization time is as short as 2 hours compared with 19.5 hours in Comparative example 1, and thus it became clear that the stabilization methods of the present invention would allow the stabilization time to be significantly shortened. In addition, the stabilization methods of the present invention have the advantage that the operation processes are very simple compared with the conventional stabilization method (Comparative example 1).

The stabilization methods shown in Comparative examples 4 to 8 used a combination of mixed gas in which three kinds of $O_2$, $H_2O$, and $CO_2$ did not coexist in order to demonstrate that the coexistence of 02, H2O, and CO2 was indispensable for the stabilization gas employed in the stabilization methods of the present invention. Any of the Comparative examples did not allow for the safe handling, because the degree of the increase in the catalyst temperature when the reduced Ni-containing catalysts were stabilized with the stabilization gas, and then removed into the air was not less than 200°C. As a result, it became clear that the stabilization of the reduced Ni-containing catalysts did not progress to a satisfactory extent. More specifically, these results reveal that the coexistence of the three kinds of $O_2$, $H_2O$, and $CO_2$ is indispensable for the rapid progress of the stabilization.

[Test 1] Measurement of catalyst surface area and the degree of Ni reduction

Next, the ratio of the surface area of the catalysts stabilized by the stabilization methods of the present invention shown in Examples 1 and 2 described above to the amount of metal Ni in the catalysts (hereinafter, abbreviated as degree of Ni reduction) is shown in Table 2. It should be noted that the surface area of the catalysts was found by the BET method using $N_2$ adsorption, while the degree of the Ni reduction was found by assigning the amount of metal Ni [A] found from the amount of $H_2$ produced by the reaction of $Ni + 2HCL \rightarrow Ni^{2+} + 2Cl_2^- + H_2$ and the whole amount of Ni [B] found from ICP by dissolving the whole amount of the catalysts to formula 1.

$$\text{Degree of Ni reduction (\%)} = [A] / [B] \times 100 \qquad \text{(formula 1)}$$

[Table 2]

| [Table 2] Surface area and degree of Ni reduction of a catalyst after treatment with varying stabilization gas | | | |
|---|---|---|---|
| Number | Kinds of stabilization gas | Surface area ($m^2$/g) | Degree of Ni reduction (%) |
| Example 1 | $O_2+H_2O+CO_2$ | 211.4 | 44.6 |
| Example 2 | $O_2+H_2O+CO_2+N_2$ | 204.7 | 45.3 |
| Comparative example 1 | $O_2+N_2$ | 209.3 | 44.2 |

The surface area of the catalysts stabilized by the stabilization methods of the present invention shown in Examples 1 and 2 described above was about 205 to 211 $m^2$/g, which was almost equivalent to a value, 209.3 $m^2$/g, of the surface area of the catalyst stabilized by the stabilization method shown in Comparative example 1, which has been industrially, widely implemented. On the other hand, the degree of the Ni reduction of the catalysts stabilized by the stabilization methods of the present invention shown in Examples 1 and 2 described above was about 45%, which was almost equivalent to a value, 44.2%, of the degree of the Ni reduction of the catalyst stabilized by the stabilization method shown in Comparative example 1, which has been industrially, widely implemented. More specifically, the catalysts stabilized by the stabilization methods of the present invention had almost the same physical properties as those of the catalysts stabilized by the stabilization methods which have been industrially, widely implemented. In general, as it has been known that a catalyst with high surface area or high degree of Ni reduction shows high activity, these results are expected to show that the catalysts stabilized by the stabilization methods of the present invention have such high activity as the catalysts stabilized by the stabilization methods which have been industrially, widely implemented.

[Test 2] Measurement of hydrogenation activity

Actual activity of the catalysts stabilized by the stabilization methods of the present invention shown in Examples 1 and 2 described above, and the catalyst stabilized by the stabilization method shown in Comparative example 1, namely, hydrogenation activity was measured.

One hundred fifty grams of the reduced Ni-containing catalysts (catalysts stabilized by the stabilization methods in accordance with the present invention shown in Examples 1 and 2, and the catalyst stabilized by the stabilization method shown in Comparative example 1) and 500 g of a cyclopentadiene polymer were introduced into a batch-type reactor provided with a stirrer, and further 8 MPa of H2 was introduced to carry out hydrogenation reaction at 190°C for 2 hours. The sample after the reaction was taken out and dissolved in cyclohexane to measure a UV-visible spectrum. Absorption attributable to a carbon-carbon double bond of the cyclopentadiene polymer appeared at 180 to 300 nm, so that the carbon-carbon double bond was quantitated by the measurement of the area of the absorption spectrum. The quantity [A] of the double bond in such quantitated material, the cyclopentadiene polymer, as described above and the quantity [B] of a carbon-carbon double bond contained in a polymer after the hydrogenation reaction were found by assigning to the following formula 2. The results of the hydrogenation activity are shown in Table 3.

$$\text{Hydrogenation activity (\%)} = (1 - [B] / [A]) \times 100 \qquad \text{(formula 2)}$$

[Table 3]

| [Table 3] Results of hydrogenation activity of each catalyst treated with varying stabilization gas | | |
|---|---|---|
| Number | Kinds of stabilization gas | Hydrogenation activity (%) |
| Example 1 | $O_2+H_2O+CO_2$ | 99.8 |
| Example 2 | $O_2+H_2O+CO_2+N_2$ | 99.8 |
| Comparative example 1 | $O_2+N_2$ | 99.8 |

The hydrogenate activity of the catalysts stabilized by the stabilization methods in accordance with the present invention shown in Examples 1 and 2 was 99.8%, this value being equivalent to the activity of the catalyst shown in Comparative example 1, which has been industrially, widely implemented. The result has demonstrated that the catalysts stabilized by the stabilization methods in accordance with the present invention have physical properties and hydrogenation activity equivalent to those stabilized by the stabilization methods which have been industrially, widely implemented, even though the stabilization time is very short, and at the same time, the operation processes are simple.

**Claims**

1. A method of stabilizing a reduced Ni-containing catalyst,
**characterized in that** mixed gas composed of $O_2$, $H_2O$, $CO_2$ and optionally inert gas is brought into contact with the reduced Ni-containing catalyst, wherein mixing $H_2O$ into $O_2$, $CO_2$ and optionally inert gas is carried out

i) by bubbling $O_2$, $CO_2$ and optionally inert gas into water to be entrained or
ii) by applying ultrasonic wave to water to produce fine water particles, to be entrained by $O_2$, $CO_2$ gas and optionally inert gas, or
iii) by generating water vapor in advance and mixing with $O_2$, $CO_2$ gas and optionally inert gas,

wherein the mixing ratio of $O_2$ in the mixed gas composed of $O_2$, $H_2O$, and $CO_2$ is 0.01 to 10.00% by volume, the mixing ratio of $H_2O$ is 0.10 to 60.00% by volume, and the mixing ratio of $CO_2$ is 30.00 to 99.89% by volume, and the mixing ratio of $O_2$ in the mixed gas composed of $O_2$, $H_2O$, $CO_2$, and inert gas is 0.01 to 10.00% by volume, the mixing ratio of the $H_2O$ is 0.10 to 60.00% by volume, the mixing ratio of the $CO_2$ is 19.90 to 95.00% by volume, and the mixing ratio of the inert gas is 1.00 to 70.00% by volume.

2. The stabilization method according to claim 1,
**characterized in that** the mixed gas further allows the coexistence of inert gas.

3. The stabilization method according to claim 1,
**characterized in that** inert gas is any one or more kinds selected from the group consisting of $N_2$, He, and Ar.

4. The stabilization method according to claim 1,
**characterized in that** stabilization temperature is not less than 0.1°C, and less than 100°C.

**Patentansprüche**

1. Verfahren zur Stabilisierung eines reduzierten Ni-enthaltenden Katalysators, **dadurch gekennzeichnet, dass** ein Gasgemisch, zusammengesetzt aus $O_2$, $H_2O$, $CO_2$ und gegebenenfalls Inertgas, mit dem reduzierten Ni-enthaltenden Katalysator in Kontakt gebracht wird, wobei das Mischen von $H_2O$ in $O_2$, $CO_2$ und gegebenenfalls Inertgas durchgeführt wird

i) durch Einleiten von $O_2$, $CO_2$ und gegebenenfalls Inertgas in Wasser, welches mitgerissen wird, oder
ii) durch Anwenden von Ultraschall auf Wasser, um feine Wasserteilchen herzustellen, welche durch $O_2$, $CO_2$-Gas und gegebenenfalls Inertgas mitgerissen werden, oder
iii) durch vorher Erzeugen von Wasserdampf und Mischen mit $O_2$, $CO_2$-Gas und gegebenenfalls Inertgas,

wobei das Mischungsverhältnis von $O_2$ in dem Gasgemisch, zusammengesetzt aus $O_2$, $H_2O$ und $CO_2$, 0,01 bis 10,00 Volumen-% beträgt, das Mischungsverhältnis von $H_2O$ 0,10 bis 60,00 Volumen-% beträgt und das Mischungsverhältnis von $CO_2$ 30,00 bis 99,89 Volumen-% beträgt, und

das Mischungsverhältnis von $O_2$ in dem Gasgemisch, zusammengesetzt aus $O_2$, $H_2O$, $CO_2$ und Inertgas, 0,01 bis 10,00 Volumen-% beträgt, das Mischungsverhältnis des $H_2O$ 0,10 bis 60,00 Volumen-% beträgt, das Mischungsverhältnis des $CO_2$ 19,90 bis 95,00 Volumen-% beträgt und das Mischungsverhältnis des Inertgases 1,00 bis 70,00 Volumen-% beträgt.

2. Stabilisierungsverfahren gemäß Anspruch 1, **dadurch gekennzeichnet, dass** das Gasgemisch ferner die Koexistenz von Inertgas ermöglicht.

3. Stabilisierungsverfahren gemäß Anspruch 1, **dadurch gekennzeichnet, dass** das Inertgas eine oder mehr Arten, ausgewählt aus der Gruppe, bestehend aus $N_2$, He und Ar, ist.

4. Stabilisierungsverfahren gemäß Anspruch 1, **dadurch gekennzeichnet, dass** die Stabilisierungstemperatur nicht niedriger als 0,1°C und niedriger als 100°C ist.

**Revendications**

1. Procédé de stabilisation d'un catalyseur au Ni réduit,
**caractérisé en ce qu'**un mélange de gaz composé de $O_2$, $H_2O$, $CO_2$ et le cas échéant un gaz inerte, est amené en contact avec le catalyseur au Ni réduit, le mélange de $H_2O$ dans $O_2$, $CO_2$ et le cas échéant un gaz inerte pouvant être effectué

   i) par barbotage de $O_2$, $CO_2$ et le cas échéant un gaz inerte dans l'eau à entraîner, ou
   ii) par application à l'eau d'une onde ultrasonore pour produire de fines particules d'eau à entraîner avec $O_2$, $CO_2$ gazeux et le cas échéant un gaz inerte, ou
   iii) par production préalable de vapeur d'eau et mélange avec $O_2$, $CO_2$ gazeux et le cas échéant un gaz inerte,

le rapport de mélange de $O_2$ dans le mélange de gaz composé de $O_2$, $H_2O$ et $CO_2$ étant de 0,01 à 10,00% en volume, le taux de mélange de $H_2O$ étant de 0,10 à 60,00% en volume, et le taux de mélange de $CO_2$ étant de 30,00 à 99,89% en volume, et

le taux de mélange de $O_2$ dans le mélange de gaz composé de $O_2$, $H_2O$, $CO_2$ et gaz inerte étant de 0,01 à 10,00% en volume, le taux de mélange de $H_2O$ étant de 0,10 à 60,00% en volume, le taux de mélange de $CO_2$ étant de 19,90 à 95,00% en volume, et le taux de mélange du gaz inerte étant de 1,00 à 70,00% en volume.

2. Procédé de stabilisation selon la revendication 1, **caractérisé en ce que** le mélange de gaz permet en outre la coexistence d'un gaz inerte.

3. Procédé de stabilisation selon la revendication 1, **caractérisé en ce que** le gaz inerte est l'un quelconque ou plusieurs choisis dans le groupe formé de $N_2$, He et Ar.

4. Procédé de stabilisation selon la revendication 1, **caractérisé en ce que** la température de stabilisation n'est pas inférieure à 0,1°C et inférieure à 100°C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2677668 A
- US 2495497 A
- US 2565347 A
- US 3838066 A
- US 2002537974 A
- US 20040074337 A1
- US 3033802 A

**Non-patent literature cited in the description**

- **Kawagoe ; Deitz.** *Petrotech,* 2004, vol. 27 (5), 431-433